# EUROPEAN PATENT APPLICATION

(11) **EP 4 664 278 A1**
(43) Date of publication of application: **17.12.2025**
(21) Application number: 25182742.4
(22) Date of filing: 13.06.2025
(51) Int. Cl.: G06F 9/4401

(54) **MEMORY CONTROLLER AND MCU CHIP**

(30) Priority: 13.06.2024 CN 202410760790
(71) Applicant: GigaDevice Semiconductor Inc., Haidian, Beijing (CN)
(72) Inventor: GAO, Yang, Beijing (CN)
(74) Representative: dompatent

(57) **Abstract**

The present invention provides a memory controller and an MCU chip, in which a mirrored buffer with a small capacity built in the MCU can be time-division multiplexed as required by actual boot settings so that contents in the NVM are copied into the mirrored buffer at different times. Moreover, a CPU can read and run the copied contents in the mirrored buffer. Additionally, new contents are copied into the mirrored buffer during or after the CPU's execution of previously copied contents in such a manner that the newly copied contents can override part or the entirety of the previous contents. With this arrangement, compared with mirrored buffers employed in conventional MCUs, hardware overhead can be reduced and significant reductions in MCU chip cost can be achieved. Further, according to the present invention, after each POR or system reset of the MCU chip, reduced contents are copied into the mirrored buffer, compared with the prior art, significantly shortening the startup time of the system.

## Description

### CROSS-REFERENCE TO RELATED APPLICATION

This application claims the priority of Chinese patent application number 202410760790.7, filed on June 13, 2024 and entitled "MEMORY CONTROLLER AND MCU CHIP", the entire contents of which are incorporated herein by reference.

### TECHNICAL FIELD

The present invention relates to the field of memory control and, in particular, to a memory controller and a microcontroller unit (MCU) chip.

### BACKGROUND

Microcontroller unit (MCU) chips are usually configured with various memory controllers for managing reading and writing of on-chip and off-chip memory components. Examples of on-chip memory include static random-access memory (SRAM), embedded flash (eFlash) memory, resistive random-access memory (RRAM), etc. Examples of off-chip memory include NOR flash memory, NAND flash memory, dynamic random-access memory (DRAM), etc.

Since the reading and writing of non-volatile memory (NVM) such as flash memory is typically slower than the operation of a central processing unit (CPU) core of an MCU chip employing the memory, a buffer may be introduced into the MCU chip to speed up the overall operation of the system. Typically, the buffer is implemented as SRAM featuring fast reading and writing, and after a power-on reset or system reset of the MCU chip, contents (e.g., code necessary for running) are copied into the buffer from the NVM (e.g., flash memory or other slow memory). As such, the CPU can directly run the copied contents in the buffer without waiting, rather than access the NVM for the contents. This speeds up the MCU's operation and significantly improves its performance.

Although such conventional buffer-based solutions can speed up the operation of an MCU chip, they greatly increase on-chip SRAM and raise chip cost. Moreover, an MCU chip with higher performance requires more complex code and hence a greater buffer capacity for its operation, necessitating even larger on-chip SRAM and further increasing the cost.

### SUMMARY

It is an objective of the present invention is to provide a memory controller and an MCU chip, which enable lower chip cost.

The above objective is attained by a memory controller of the present invention for controlling operation of a central processing unit (CPU) of a microcontroller unit (MCU) on associated non-volatile memory (NVM), the MCU having a built-in mirrored buffer with a capacity smaller than a capacity of the NVM, wherein the memory controller is configured to:
time-division multiplex the mirrored buffer according to boot settings of the MCU so that contents in the NVM required by the boot settings are copied into the mirrored buffer in sequential copying steps and that, after each copying step is completed, the CPU is released to directly read and run contents copied into the mirrored buffer in a specific copying step, simultaneously with or followed by initiation of the next copying step in which contents copied into the mirrored buffer are able to override part or the entirety of the contents copied in the specific copying step.

Thus, according to the present invention, the built-in mirrored buffer with a small capacity (e.g., comparable to or smaller than that of one main bank of the NVM) is arranged in the MCU, and is time-division multiplexed so that contents in the NVM are copied into the mirrored buffer in successive steps as required by the boot settings of the MCU. Moreover, new contents are copied into the mirrored buffer during or after the execution of previously copied contents in such a manner that the newly copied contents can override part or the entirety of the previous contents. Therefore, compared with conventional MCU buffers, hardware overhead can be reduced and significant reductions in MCU chip cost can be achieved. Further, according to the present invention, after each POR or system reset of the MCU chip, reduced contents are copied into the mirrored buffer, significantly shortening the startup time of the system.

Optionally, the NVM may be integrated with the memory controller and the CPU within a single chip package. Alternatively, the memory controller and the CPU may be integrated in a single chip package, while the NVM may be arranged outside the chip package. With this arrangement, upon a POR or system reset of the MCU chip, contents can be copied from the on-chip or off-chip NVM into the built-in mirrored buffer of the memory controller, and the CPU can directly run the copied contents in the mirrored buffer without waiting. This can greatly speed up overall operation of the system and enhance performance of the MCU chip.

Optionally, the mirrored buffer may be one or more static random-access memory (SRAM) blocks. With this arrangement, the fast reading nature of SRAM can be taken advantage of to enable the memory controller with the built-in mirrored buffer to enhance overall operation of the system as much as possible.

Optionally, the memory controller may be configured to initiate the next copying step when the CPU is running the contents copied in the specific copying step so that the contents copied in the specific copying step are replaced in parallel with the contents copied in the next copying step. With this arrangement, the system can be maintained in high-speed operation, enabling the chip to provide high performance.

Optionally, the NVM may have a plurality of functional memory banks and the memory controller may have a configuration register and a status register, which are both built in the memory controller and each have control bits each corresponding to a respective one of the functional memory banks, wherein:
the configuration register is configured to load and store initial values of the control bits corresponding to the respective functional memory banks required by the boot settings after a POR or system reset of the MCU, the initial value of each control bit corresponding to the respective functional memory bank characterizing whether contents in the functional memory bank are to be copied into the mirrored buffer; and/or
the status register is configured to store and update current values of the control bits corresponding to the respective functional memory banks based on copied contents currently stored in the mirrored buffer, the current value of each control bit corresponding to the respective functional memory bank characterizing whether contents in the functional memory bank have been copied into the mirrored buffer; and/or
the memory controller is further configured to time-division multiplex the mirrored buffer according to the initial values of the control bits in the configuration register so that the contents in the NVM required by the boot settings are copied into the mirrored buffer in the sequential steps, and to update the current value(s) of affected control bit(s) in the status register.

With this arrangement, in the event of a POR or system reset of the MCU, the initial values of the control bits in the configuration register in the memory controller (i.e., target configurations) can be updated in a timely manner as required by the boot settings of the MCU, and the memory controller can time-division multiplex the mirrored buffer according to the target configurations in the configuration register so that contents in the NVM are copied into the mirrored buffer and run by the CPU at different times. Moreover, statuses in the status register can be updated to flexibly trigger copying and replacement of contents in the mirrored buffer.

Optionally, the memory controller may further have a control register and a control logic unit, which are both built therein, wherein
the control register is configured to accomplish, under the control of the control logic unit, at least one of: 1) enabling or disabling the function of overriding and rewriting a bank of the mirrored buffer; 2) generating a replacement done flag upon the completion of overriding and rewriting of a bank of the mirrored buffer; 3) generating a configuration error flag for an incorrect user-defined configuration; 4) producing, in response to at least one of a replacement done flag and a configuration error flag, an interrupt signal for notifying the CPU; and 5) configuring a lock bit in the event of a need for secure boot, which locks a corresponding one of the control bits in the configuration register from any modification.

Optionally, the memory controller may further have a first bus interface and a second bus interface, wherein:
the first bus interface is configured to connect the memory controller on a master interface of a system bus to allow the CPU to be released after the completion of each copying step to read and run contents copied into the mirrored buffer in the specific copying step; and/or
the second bus interface is configured to connect the memory controller on a slave interface of the system bus to allow an associated master device on the system bus to access the memory controller; and/or
the memory controller further has a memory interface, wherein:
   the memory interface is configured to establish a communicative connection between the control logic unit and the NVM; and
   the control logic unit is configured to, when receiving an erase command from the CPU, send a corresponding command for rewriting contents in the NVM through the memory interface and, if necessary, update the rewritten contents to the mirrored buffer.

With this arrangement, in the event of a need for secure boot and for locking of the boot order, the lock bit in the control register can be configured to lock a corresponding control bit in the configuration register from any modification. Moreover, the lock bit in the control register may not be allowed to be updated or reconfigured until the CPU is released. Further, when replacement of contents in the mirrored buffer is completed, or in the event of an incorrect user-defined configuration, a corresponding flag may be generated in a timely manner and an interrupt signal may be produced based on this flag, which instructs the CPU to proceed to subsequent processing.

Optionally, the NVM may have option bytes configured to store the initial values of the control bits and update the configuration register upon a POR or system reset of the MCU. With this arrangement, compared with the prior art, to the option bytes of the NVM, expectations of contents copied into the mirrored buffer, i.e., target configurations, initial values of which have been determined, are added. In this way, as soon as a POR or system reset of the MCU chip occurs, the configuration register in the memory controller will be updated, ensuring correct time-division multiplexing of the mirrored buffer and a correct order in which the CPU runs different programs.

Optionally, the option bytes may be further configured to store chip boot options of the MCU, which specify an initial address that the CPU first reads upon a POR or system reset of the MCU. With this arrangement, the CPU of the MCU can be set to first execute, after it starts up, bootloader code, OTP code or security code. This arrangement is suitable for scenarios where the MCU has busy pins.

Alternatively, at least one boot pin of the MCU may be used to set an initial address that the CPU first reads upon a POR or system reset of the MCU. With this arrangement, two pins of the MCU may be designated as boot pins for specifying an initial address that the CPU of the MCU reads first, and hence which of the bootloader code, the OTP code and the security code is executed first by the CPU, after it starts up. This arrangement is suitable for scenarios where the MCU has sufficient pins.

Optionally, the NVM may have at least one main bank for storing associated main code and at least one code bank for storing other code than the main code, wherein the capacity of the mirrored buffer is equal to or smaller than a capacity of one of the main bank(s) and the memory controller is further configured to: first copy contents in at least one of the code bank(s) and part of contents in one of the main bank(s) into the mirrored buffer according to the boot settings; then release the CPU to allow it to read and run the contents copied from the code bank(s) in the mirrored buffer; during or after the running, copy the remainder of the contents from the main bank into the mirrored buffer so that it overrides the contents from the code bank(s) that were previously stored in the mirrored buffer; and again release the CPU to allow it to run the contents copied from the main bank in the mirrored buffer.

With this arrangement, the CPU can first execute special code, which is smaller in volume and not stored in the main bank(s) of the NVM, and part of the main code can be copied along with the special code. Additionally, the remaining main code can be copied at a later time so as to override the special code in the mirrored buffer. As such, reduced contents are copied in the second copying step, greatly improving the system's operating efficiency.

Optionally, the code bank(s) may include at least one of a bootloader bank for storing bootloader code, an OTP bank for storing OTP code and a security bank for storing security code. With this arrangement, special functions such as system initialization, information (or parameter) configuration, security and so on can be delivered. Additionally or alternatively, the boot settings may include start and end addresses for the main bank in the mirrored buffer, which are modifiable to enable the memory controller to copy the remainder of the contents from the main bank into the mirrored buffer so that it overrides the contents from the code bank(s) that were previously stored in the mirrored buffer.

Optionally, the functional memory banks in the NVM may be divided into at least two classes each assigned with a different priority level and the memory controller may copy, according to the boot settings, contents in the functional memory banks into the mirrored buffer in order from the highest to lowest priority level in different steps on a time-division basis. With this arrangement, the program codes can be copied and executed in order of their priority.

Optionally, each functional memory bank with a higher priority level in the NVM may have larger logical addresses and contents in the functional memory bank with the higher priority level may be copied to a bank of the mirrored buffer (31) which is closer to an end address thereof. With this arrangement, contents in the mirrored buffer can be overridden in order from the most to least significant physical address.

Optionally, the memory controller may further have an associated cache which is built in, or arranged outside, the memory controller, wherein the cache allows for faster reading and writing than the NVM and is configured for contents to be copied therein, as required by the boot settings, from addresses in the NVM outside a logical address range of the mirrored buffer so that the contents copied into the cache are directly accessible to the CPU. Accesses of the CPU to logical addresses of the NVM outside the logical address range of the access mirrored buffer can be accelerated by the cache that allows for faster reading and writing than the NVM, resulting in improvements in system performance.

Based on the same inventive concept, the present invention also provides an MCU chip comprising a CPU and the memory controller as defined above, which are integrated within a single chip package so as to be communicatively connected to each other, wherein NVM is also integrated in, or arranged outside, the chip package so as to be communicatively connected to the memory controller to allow the memory controller to control operation of the CPU on the NVM.

Since the MCU chip incorporates the memory controller of the invention, it can provide high performance at lower chip cost and a reduced chip area.

### BRIEF DESCRIPTION OF THE DRAWINGS

Those of ordinary skill in the art would appreciate that the following drawings are presented to enable a better understanding of the present invention and do not limit the scope thereof in any sense, in which:
Fig. 1 shows an application example of a memory controller employing a mirrored buffer;
Fig. 2 schematically illustrates a mapping between a mirrored buffer employed in a conventional memory controller and a memory space of memory;
Fig. 3 is a schematic flowchart of operation of the memory controller of Fig. 2;
Fig. 4 schematically illustrates a mapping between a mirrored buffer employed in a memory controller according to an embodiment of the present invention and a memory space of memory;
Fig. 5 is a schematic flowchart of operation of the memory controller of Fig. 4; and
Figs. 6 to 10 schematically illustrate different internal architecture examples of a memory controller and an MCU chip according to an embodiment of the present invention.

### DETAILED DESCRIPTION

The following description sets forth numerous specific details in order to provide a more thorough understanding of the present invention. However, it will be apparent to those skilled in the art that the present invention can be practiced without one or more of these specific details. In other instances, well-known technical features have not been described in order to avoid unnecessary obscuring of the invention. It is to be understood that the invention may be embodied in many different forms and should not be construed as being limited to the embodiments set forth below. Rather, these embodiments are provided so that this disclosure is thorough and conveys the scope of the invention to those skilled in the art. In the drawings, like reference numerals refer to like elements throughout. It will be understood that when an element is referred to as being "connected to" or "coupled to" another element, it can be directly connected or coupled to the other element, or intervening elements may also be present. In contrast, when an element is referred to as being "directly connected to" another element, there are no intervening elements. As used herein, the singular forms "a", "an" and "the" are intended to include the plural forms as well, unless the context clearly indicates otherwise. It will be further understood that the term "comprising" specifies the presence of stated features, steps, operations, elements, and/or components, but do not preclude the presence or addition of one or more other features, steps, operations, elements, components, and/or groups thereof. As used herein, the term "and/or" includes any and all combinations of the associated listed items.

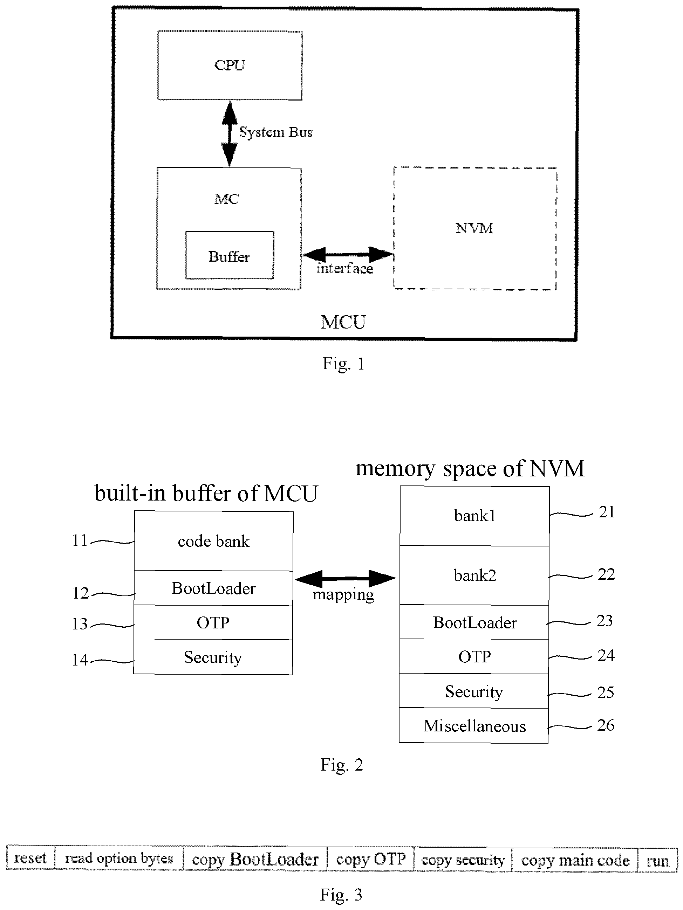

Fig. 1 shows an application example of a memory controller (MC) employing a mirrored buffer. Notably, although the shown memory is flash memory, it is a matter of course that it may also be other non-volatile memory (NVM) such as resistive random-access memory (RRAM) or ferroelectric random-access memory (FeRAM). In one embodiment, the memory is flash memory, and the memory controller is accordingly a flash memory controller (FMC).

The MC may be implemented within a micro-controller unit (MCU) chip (of course, the present invention is not so limited, and the MC may also be implemented in, for example, a micro-processor or system-on-chip (SoC), without departing from the scope of the invention) and communicatively connected to a central processing unit (CPU) core of the MCU chip via a system bus. Moreover, the MC is connected to the NVM via an appropriate memory interface (e.g., a flash memory interface) to control read, write, erase and other operations of the CPU on the NVM.

The NVM may be implemented within the MCU chip as embedded flash (eFlash) memory or RRAM. Alternatively, it may be implemented within the MCU chip as a memory (e.g., flash memory) die, which is integrated with a die of the CPU core within a single package (i.e., in the form of a system-in-package (SiP)). Still alternatively, it may be implemented outside of the MCU chip as off-chip memory, such as flash memory or dynamic random-access memory (DRAM), which is connected to the MCU chip via traces on a printed circuit board (PCB).

Physically, the mirrored buffer may be disposed within the MC (see Fig. 1). Alternatively, it may be disposed within the MCU chip but outside the MC. Physically, the mirrored buffer within the MCU chip is often implemented as SRAM. Following a power-on rest (POR) or system reset of the MCU chip, contents (e.g., code necessary for running) are copied into the mirrored buffer from the NVM (e.g., flash memory or other slow memory). In the event of a need of the CPU or another bus-master device to access the NVM's logical address space corresponding to the copied contents, the MC will directly return the desired contents from the mirrored buffer to the CPU without waiting (i.e., the CPU will directly run the copied contents in the buffer without waiting). In this process, the memory interface between the MC and the NVM does not need to do anything. This can significantly improve operating efficiency of the MCU system. Upon the MC receiving an erase command, its internal control logic will send, through the memory interface, a corresponding command for rewriting the contents in the NVM, and a corresponding update will be made to the mirrored buffer to ensure data consistency.

Referring to Fig. 2, such a conventional mirrored buffer-based solution often additionally features: 1) dividing the NVM's memory space (also known as its logical address space) into multiple functional memory banks including, for example, a first main bank 21 (labeled as "bank1" in the figure) for storing corresponding main code, a second main bank ("bank2") 22 for storing corresponding main code, a bootloader bank 23 ("BootLoader") for storing bootloader code, a one-time programming (OTP) bank 24 ("OTP") for storing OTP code, a security bank 25 for storing security code, and a miscellaneous bank 26 for storing other contents than the above (data, other codes, etc.); and 2) configuring a mirrored main bank 11, a mirrored bootloader bank 12, a mirrored OTP bank 13 and a mirrored security bank 14 in the mirrored buffer in the MCU chip.

Additionally, with combined reference to Figs. 1 to 3, after a reset of the MCU chip (labeled as "reset" in Fig. 3, which may be either a system reset or a POR), the MC reads option bytes ("read option bytes") in the NVM according to boot settings of the MCU chip (also referred to as "boot configurations of the MCU chip" or "configurations of the MCU chip", which determine which of the bootloader code, the OTP code and the security code is loaded first when the CPU starts up and may be set through two boot pins of the MCU chip, or through option bytes when the pins are busy) and then successively copies the bootloader code from the bootloader bank 23 of the NVM into the mirrored bootloader bank 12 of the mirrored buffer ("copy bootloader"), the OTP code from the OTP bank 24 of the NVM into the mirrored OTP bank 13 of the mirrored buffer ("copy OPT") , the security code from the security bank 25 of the NVM into the mirrored security bank 14 of the mirrored buffer ("copy security code") and the main code from the first main bank 21 or second main bank 22 of the NVM into the mirrored main bank 11 of the mirrored buffer ("copy main code"). After this is done, the CPU is released and starts program execution. If an address to be accessed by the CPU is within a range assigned to any of the aforementioned banks of the mirrored buffer, the CPU will read the intended contents directly from the mirrored buffer without waiting. In contrast, when an address to be accessed by the CPU is within a range assigned to the miscellaneous bank 26 (i.e., outside the assigned address range of the mirrored buffer), the MC reads the intended contents from the miscellaneous bank 26 of the NVM through the aforementioned interface. This read operation on the miscellaneous bank 26 is accomplished at a slower speed.

In practical reset processes, the majority of accesses from the CPU are made to the first main bank 21 through the security bank 25 of the NVM's logical address space. As the contents in these banks have been copied at a one-to-one ratio into the mirrored buffer in advance, the CPU can directly access the mirrored buffer to retrieve the contents, allowing the system to operate very fast. However, as such MCU chips are developing towards higher performance, more and more complex contents are stored in the first main bank 21 through the security bank 25, necessitating an increasingly larger capacity of the mirrored buffer. Consequently, increasingly larger SRAM is required to physically implement the mirrored buffer, making such MCU chips more and more expensive.

Further, it is not the case that the boot settings of all such MCU chips must use all the contents stored in the first main bank 21 through the security bank 25 (i.e., the codes) throughout all the debugging, firmware upgrading, booting and normal operation phases. For example, after every system reset or POR, the OTP code stored in the OTP bank 24 and the security code stored in the security bank 25 are usually executed only once, and the completion of checks is immediately followed by execution of a program stored in the first main bank 21 or second main bank 22. Accordingly, in the MC's mirrored buffer, except for the mirrored main bank 11, depending on the boot settings, the mirrored bootloader bank 12, the mirrored OTP bank 13 and the mirrored security bank 14 may be used only once and remain idle after being used, or may not be used at all and remain idle all the time. This leads to a waste of the SRAM resources.

In view of the above, the present invention provides a memory controller (MC) and a microcontroller unit (MCU) chip. The MC includes a mirrored buffer (referred to hereinafter, and labeled in the figures, as the "buffer") with a small capacity (e.g., comparable to or smaller than that of one main bank of NVM). Depending on boot settings of the MCU chip (including an initial address determining which of bootloader code, OTP code and security code is executed first after an associated CPU is powered on), some banks in the buffer are time-division multiplexed and mapped according to a need to contents in multiple functional memory banks of the NVM (e.g., including main banks 21 and 22, a bootloader bank 23, an OTP bank 24, a security bank 25, etc.). In this way, compared with the conventional solution, the hardware overhead of the mirrored bootloader bank 12, the mirrored OTP bank 13 and the mirrored security bank 14 in the mirrored buffer is reduced, resulting in significant reductions in chip cost. Moreover, as reduced contents are copied into the mirrored buffer during power-on, the startup time of the system can be significantly shortened. Further, appropriate software may be used, which is programmed so that used contents (e.g., the OTP code, the security code, etc.) in the mirrored buffer are replaced with other contents (e.g., main code) in parallel to program execution to achieve comparably high performance to the conventional solution. In particular, in some highly area/cost-sensitive applications, a mirrored buffer with a capacity smaller than that of one main bank of the NVM may be selected, and full use of this capacity can be made through time-division multiplexing or a reasonably planned software program. As such, a reasonable tradeoff can be made between area and performance from comprehensive considerations.

The present invention will be described in greater detail below with reference to the accompanying drawings, which illustrate specific embodiments thereof. From the following description, advantages and features of the invention will become apparent. Note that the figures are provided in a very simplified form not necessarily drawn to exact scale for the only purpose of helping to explain the disclosed embodiments in a more convenient and clearer way.

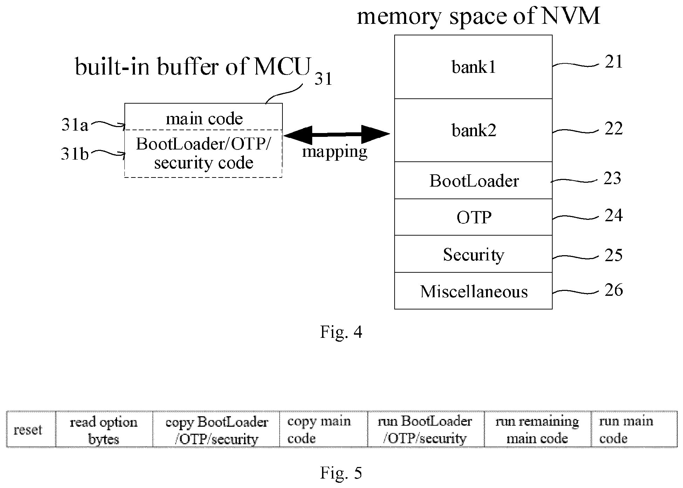

Referring to Fig. 4, in one embodiment of the present invention, there is provided a memory controller (MC) employing a mirrored buffer (buffer) 31, which is configured to control operation of a central processing unit (CPU) of a microcontroller unit (MCU) chip on associated non-volatile memory (NVM).

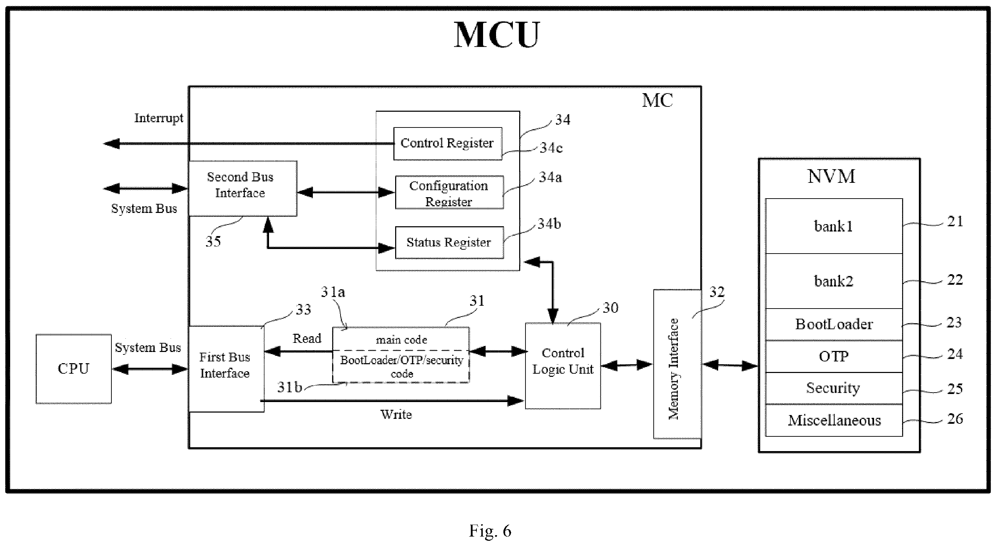

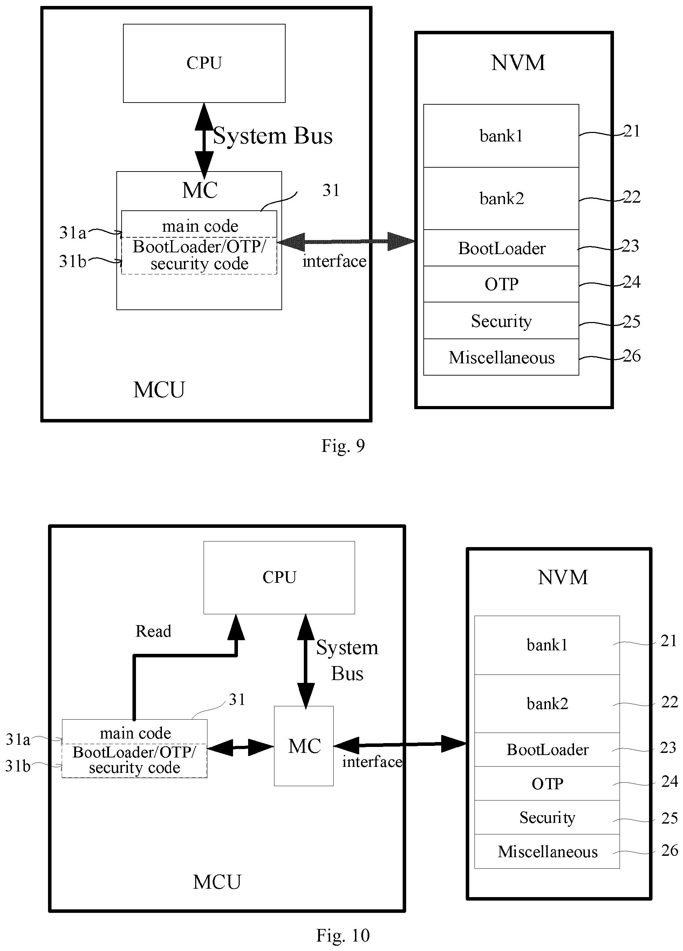

The NVM may be implemented as embedded flash (eFlash) memory, resistive random-access memory (RRAM) or the like, which is fabricated in the same die as the MC and the CPU so as to be included in the MCU chip. Alternatively, it may be implemented within the MCU chip as a memory die (e.g., a flash memory die), which is integrated with an MCU die (including the CPU, MC and other modules) within a single package using a system-in-package (SiP) process, as shown in Fig. 6. In these cases, the NVM, the MC and the CPU may be considered as being integrated in a single chip package. Alternatively, the NVM may be implemented outside the MCU chip as off-chip NVM, such as flash memory, RRAM or ferroelectric random-access memory (FeRAM), which is connected to the MCU chip via traces on a printed circuit board (PCB), as shown in Fig. 9. In this case, the MC and the CPU are integrated within the MCU chip, while the NVM is disposed out of the MCU chip package. The MC serves as an extra memory controller (EXMC) module, while the NVM is external memory controlled by the MC.

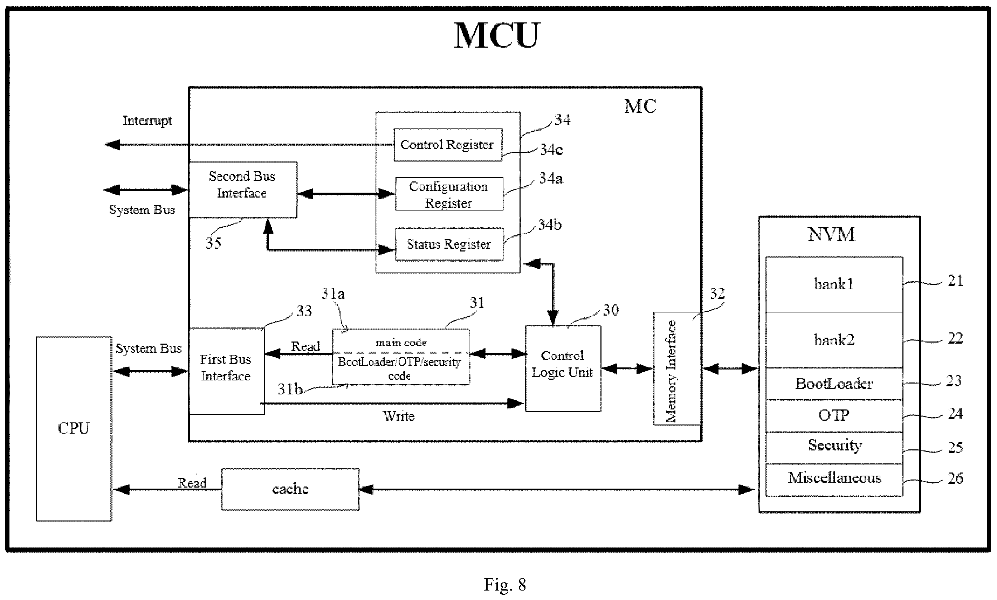

Physically, the mirrored buffer 31 may be provided within the memory controller, as shown in Figs. 6 to 9. Alternatively, it may be disposed outside the MC but within the MCU chip, as shown in Fig. 10. Upon a power-on reset (POR) or system reset of the MCU chip, contents (e.g., program code, etc.) in the NVM are copied by the MC into the mirrored buffer 31. In the event of a need of the CPU to access the NVM's logical address space corresponding to the copied contents in the mirrored buffer 31, the MC will directly return the desired contents from the mirrored buffer 31 to the CPU without waiting ((i.e., the CPU will directly run the copied contents in the mirrored buffer 31 without waiting). In this process, a memory interface between the MC and the NVM does not need to do anything. In this way, operating efficiency of the system can be significantly improved.

As shown in Fig. 6, the mirrored buffer 31 can be directly read by the CPU through an AXI, AHB or another system bus, but cannot be directly written by the CPU. In order to make an update to the contents in the mirrored buffer 31, the updating contents must be written by the MC through the memory interface 32 first into a corresponding bank of the NVM and then back into the mirrored buffer 31 (using a write-back operation).

Further, the mirrored buffer 31 may be physically implemented by one or more static random-access memory (SRAM) blocks in the MCU chip. As an example, if the SRAM that implements the mirrored buffer 31 has a physical bit-width of 32 bits, then the MC may convert a logical address of the NVM into a corresponding physical address of the mirrored buffer 31 by dividing the logical address by 4. As another example, if the SRAM that implements the mirrored buffer 31 has a physical bit-width of 64 bits, then the MC may convert a logical address of the NVM into a corresponding physical address of the mirrored buffer 31 by dividing the logical address by 8. In this way, fast reading of the SRAM may be taken advantage of to allow the mirrored buffer 31 in the MC to be read at a very fast speed, which can speed up overall operation of the system.

In this embodiment, the mirrored buffer 31 has a capacity smaller than that of the NVM, and a logical address range of the mirrored buffer 31 forms part of the NVM's logical address range. The CPU can directly access the mirrored buffer 31 (e.g., by bytewise addressing) based on logical addresses of the NVM to read and run contents stored in the mirrored buffer 31 at the logical addresses.

In other words, in this embodiment, the contents in the NVM required to be executed by the CPU according to boot settings of the MCU chip cannot be all copied by the MC at a one-to-one ratio into the mirrored buffer 31 within a single step. Accordingly, according to this embodiment, the MC is configured so that the mirrored buffer 31 is time-division multiplexed according to the boot settings of the MCU chip to copy the contents in the NVM required by the boot settings into the mirrored buffer 31 in sequential steps. Moreover, the CPU is released after each copying step is completed to directly read and run the contents copied from the mirrored buffer 31, and the contents copied in each succeeding copying step is run in parallel or subsequent to the running of the contents copied in the immediately preceding copying step. Further, the contents copied into the mirrored buffer 31 in each succeeding copying step may override part or the entirety of the contents copied therein in the immediately preceding copying step. In this embodiment, a memory space of the NVM (i.e., its logical address space) is divided into at least one main bank each for storing corresponding main code and at least one other bank for storing other codes than the main code(s).

The main bank(s) of the NVM is/are its primary bank(s) and may include, for example, a first main bank (labeled as "bank1" in the figure) 21 and a second main bank ("bank2") 22, which are used to store different main codes or replicas of the same main code, each serving as a backup of the other. Each main bank has a larger capacity than every bank. The other bank(s) of the NVM than the main bank(s) may include a bootloader bank 23 for storing bootloader code ("BootLoader"), a one-time programming (OTP) bank 24 for storing OTP code, a security bank 25 for storing security code ("Security") and a miscellaneous bank 26 for storing other contents than the above (data, other codes, etc.). The contents stored in these banks may be executed by the CPU to perform special functions such as system initialization, information (or parameter) configuration, security protection and so forth.

In general, accesses of the CPU are much more likely to be made to logical address spaces of the main banks 21 and 22, the bootloader bank 23, the OTP bank 24 and the security bank 25 of the NVM than to that of the miscellaneous bank 26. Accordingly, in one example, the mirrored buffer 31 may have a capacity equal to or smaller than that of one main bank of the NVM. Accordingly, the mirrored buffer 31 may be mapped in a time-division multiplexed manner (over part or the entirety of its memory space) to one or more of the main banks 21 and 22, the bootloader bank 23, the OTP bank 24 and the security bank 25 of the NVM so that the contents in one or more of the main banks 21 and 22, the bootloader bank 23, the OTP bank 24 and the security bank 25 of the NVM are successively and sequentially copied into the mirrored buffer 31 at a one-to-one ratio at different times. The CPU may directly access the mirrored buffer 31 at different times to sequentially retrieve and run the copied contents. Thus, for example, after starting up, the CPU may load the bootloader code, the OTP code or the security code first. This allows the system to run at a very fast speed. Moreover, compared with the mirrored buffer-based solution shown in Fig. 1, this solution does not require hardware overhead for the bootloader bank 12, the OTP bank 13 and the security bank 14, resulting in remarkable reductions in chip cost. Further, as reduced contents are copied during power-on, the startup time can be significantly shortened.

In some examples, the boot settings of the MCU chip, also referred to as "boot configurations of the MCU chip" or "configurations of the MCU chip", may include a setting that determines which of the bootloader code, the OTP code and the security code is executed first by the CPU after it starts up. This may be set through two boot pins of the MCU chip, or through option bytes when the pins are busy.

Further, with combined reference to Figs. 4 to 5, in one example, according to the boot settings of the MCU chip, special code, i.e., at least one of the bootloader code, the OTP code and the security code, is to be executed first. Operation of the MC in this case is explained below.

Upon a system reset (labeled as "reset" in Fig. 5), the MC first reads option bytes in the NVM ("read option bytes") according to the configurations, and determines whether it is necessary to copy the special code, i.e., the bootloader code, the OTP code or the security code into the mirrored buffer 31 according to the current boot settings of the MCU chip. Next, as required by the boot settings, the codes stored in the bootloader bank 23, the OTP bank 24 or the security bank 25 of the NVM is copied at a one-to-one ratio mirrored buffer 31 ("copy BootLoader/OTP/Security"). Since the main code is usually stored from the first address or a slightly more significant address in the corresponding logical address space of the NVM, if the volume of the special code is smaller than the capacity of the mirrored buffer 31, it may be copied into a second half 31b of a physical address space of the mirrored buffer 31, and part of the main code in one main bank (e.g., bank1) of the NVM may be copied at a one-to-one ratio into a first half 31a of the physical address space of the mirrored buffer 31 ("copy main code" in Fig. 5). After the copying is completed, the CPU is released to directly read and execute the special code ("run BootLoader/OTP/Security" in Fig. 5) in the second half 31b of the physical address space of the mirrored buffer 31 without waiting. After the execution is completed, settings of the option bytes are modified by a software program so that the MC is triggered to copy the remainder of the main code in the main bank of the NVM at a one-to-one ratio into the mirrored buffer 31 in such a manner that the copied contents (copy remaining main code in Fig. 5) override the contents in the second half 31b of the mirrored buffer 31, which will not be used any longer. In this way, the entire main code is copied. After this is done, the CPU is again released to directly read and executed the main code ("run main code" in Fig. 5) in the mirrored buffer 31 without waiting.

In other words, in this application example, the memory controller MC is further configured to copy the contents in at least one other bank and part of the contents in one main bank of the NVM into the mirrored buffer 31 according to the settings in the option bytes of the NVM or in a built-in configuration register (these settings may form part of the boot settings) and then release the CPU to allow it to run the contents copied from those banks in the mirrored buffer 31. Moreover, during or after the execution of the contents from those banks, it copies the remaining contents in the main bank of the NVM into the portion of the mirrored buffer 31 storing the contents that have been used in such a manner that the copied contents override the used contents. After that, it again releases the CPU to allow it to run the contents copied from the main bank in the mirrored buffer 31. In this application example, the CPU may first execute the special code that is smaller in volume than the main code stored in the main bank of the NVM, and may copy part of the main code along with the special code. In this way, the remainder of the main code may be subsequently copied so as to override the special code in the mirrored buffer 31. As reduced contents are copied in the subsequent copying step, significantly faster copying can be achieved.

The option bytes form a special storage block of the NVM often used to store information regarding the MCU chip's configurations and safeguarding of the NVM. For example, it may store configuration information regarding read and write protection of the NVM, a mode of enabling a watchdog, chip boot options, RAM verification, power monitoring, etc. In this example, the option bytes in the NVM store boot options for the MCU chip, which specify an initial address read first by the CPU, and hence the one of the bootloader code, the OTP code and the security code that is executed first by the CPU, following a POR or system reset of the MCU chip (i.e., the option bytes are added with settings specifying contents expected to be copied into the mirrored buffer 31). This is suitable for use in applications where pins of the MCU chip are busy. In other examples, when the MCU chip has sufficient pins, at least one (e.g., two) of the pins may be designated as boot pin(s) for specifying an initial address read first by the CPU, and hence which of the bootloader code, the OTP code and the security code is executed first by the CPU, following a POR or system reset of the MCU chip.

Optionally, during the CPU's execution of contents previously copied into the mirrored buffer 31, a new copying step is initiated in parallel to replace the previously copied contents in the mirrored buffer 31 that have been used with the newly copied contents. In this way, the system can be maintained in high-speed operation to provide high performance. In some highly area/cost-sensitive applications, full use of the capacity of the mirrored buffer 31 can be made through time-division multiplexing of the mirrored buffer 31 or through a reasonably planned software program. As such, a reasonable tradeoff can be made between area and performance from comprehensive considerations.

It would be appreciated that, in this embodiment, the mirrored buffer 31 is incorporated in the internal hardware architecture of the MC, and in addition to the mirrored buffer 31, the MC may include any other suitable hardware component.

Referring to Fig. 6, in one exemplary embodiment of the present invention, the MC includes a control logic unit 30, a memory interface 32, a first bus interface 33, a register file 34 and a second bus interface 35, in addition to the mirrored buffer 31. The register file 34 includes a configuration register 34a, a status register 34b and a control register 34c. In other examples, when the mirrored buffer 31 is disposed outside the MC, the MC's hardware architecture may also include a control logic unit 30, a memory interface 32, a first bus interface 33, a register file 34 and a second bus interface 35.

Each of the configuration register 34a and the status register 34b contains control bits for the respective functional memory banks of the NVM. Initial values of the control bits in the configuration register 34a can be updated with non-volatile contents in the NVM (e.g., in the option bytes of the NVM) and can be modified through the system bus.

In this example, the option bytes form a special storage block of the NVM for storing not only information commonly stored in conventional option bytes, such as information regarding read and write protection of the NVM, a mode of enabling a watchdog, RAM verification, power monitoring, etc. (this enables the option bytes to provide the same functions as conventional option bytes do) but also the boot options for the MCU chip that specify an initial address read first by the CPU, and hence contents expected to be first copied from the NVM into the mirrored buffer 31 according to the current boot settings of the MCU chip, i.e., which of the bootloader code, the OTP code and the security code is executed first by the CPU, as well as the initial values of the control bits in the configuration register, upon a POR or system reset of the MCU chip. After the CPU starts running, the configuration register 34a can be read and written by software. Moreover, upon each POR or system reset of the MCU chip, the initial values of the control bits in the configuration register can be updated by the option bytes of the NVM. With this arrangement, compared with the prior art, to the option bytes of the NVM, expectations of contents copied into the mirrored buffer, i.e., target configurations, initial values of which (including an initial address first read by the CPU and the initial values of the control bits) have been determined, are added. In this way, as soon as a POR or system reset of the MCU chip occurs, the configuration register in the memory controller will be updated, ensuring correct time-division multiplexing of the mirrored buffer and a correct order in which the CPU runs different programs.

Additionally, the configuration register 34a is configured so that, following a POR or system reset of the MCU chip, the initial values of the control bits that correspond to the respective functional memory banks as required by the current boot settings of the MCU chip are loaded and stored. Each initial value characterizes whether the contents in the respective functional memory bank is to be copied into the mirrored buffer 31. The configuration register 34a allows reading and writing by software.

The status register 34b is configured to store and update current values of the control bits that correspond to the respective functional memory banks according to current copied contents in the mirrored buffer 31. Each current value characterizes whether the contents in the respective functional memory bank have been copied into the mirrored buffer 31. The status register 34b allows only updating by hardware and reading by software but not writing by software.

The MC is further configured to time-division multiplex the mirrored buffer according to the initial values of the control bits in the configuration register 34a to allow the contents in the NVM to be copied into the mirrored buffer 31 in sequential steps as required by the current boot settings of the MCU chip and update the current values of the control bits in the status register 34b.

The control register 34c is configured to accomplish, under the control of the control logic unit 30, at least one of:
1) enabling or disabling the function of overriding and rewriting a given bank of the mirrored buffer 31;
2) generating a replacement done flag upon the completion of overriding and rewriting of a given bank of the mirrored buffer 31;
3) generating a configuration error flag for any incorrect user-defined configuration;
4) producing an interrupt signal in response to at least one of a replacement done flag and a configuration error flag to instruct the CPU to proceed to subsequent processing; and
5) configuring a lock bit in the event of a need for secure boot, which locks a given control bit in the configuration register 34a from any modification.

The first bus interface 33 is configured to connect the MC on a master interface of the system bus to allow the CPU to be released after each copying operation is completed to read and run the contents copied into the mirrored buffer 31 in the copying operation.

The memory interface 32 is configured to establish a communicative connection between the control logic unit 30 and the NVM.

The control logic unit 30 is configured to copy contents specified in a read command received from the CPU from the NVM into the mirrored buffer 31 through the memory interface 32. In addition, when receiving an erase command from the CPU, it sends through the memory interface 32 a corresponding command for rewriting contents in the NVM specified in the command and updating, as required, the rewritten contents to the mirrored buffer 31.

The second bus interface 35 is configured to connect the MC on a slave interface of the system bus to allow a master device on the system bus to access the configuration register or another hardware component in the MC.

In one example, with additional reference to Fig. 6, the NVM has two main banks: a first main bank (labeled as "bank1" in the figure) 21 and a second main bank ("bank2") 22, which are controlled based on sector granularity, as required. The NVM also has the following banks for storing special codes: a bootloader bank 23, an OTP bank 24 and a security bank 25. These banks may be appropriately configured according to some rules. For example, if a configuration conflict occurs between the main banks and the bootloader 23, OTP 24 and security 25 banks, the MC hardware may provide protection to a predetermine class of functional memory banks due to their higher priority and generate a configuration error flag. Further, since the special codes may show a certain degree of mutual exclusion in function, if necessary, the hardware may be designed with some security protection mechanism against such mutual exclusion among configurations of the special banks.

Configurations in the configuration register 34a, the status register 34b and the control register 34c and other configurations for the mirrored buffer 31 are listed in the following table:

| Register configurations | | Description |
|---|---|---|
| bank control | bank swap | 0: bank1 as main code (the main code in the first |
| | (paging) option byte | main bank 21 of the NVM is the desired main code specified in the current boot settings of the MCU chip); |
| | | 1: bank2 as main code (the main code in the second main bank 22 of the NVM is the desired main code specified in the current boot settings of the MCU chip |
| target configurations in the configuration register 34a (which may be simply referred to as "target configurations") | start sector | A target start sector in the mirrored buffer 31 for the main code |
| | end sector | A target end sector in the mirrored buffer 31 for the main code |
| | BootLoader | 0: the bootloader code in the NVM is not to be copied into the mirrored buffer 31; |
| | | 1: the bootloader code in the NVM is to be copied into the mirrored buffer 31 |
| | OTP | 0: the OTP code in the NVM is not to be copied into the mirrored buffer 31; |
| | | 1: the OTP code in the NVM is to be copied into the mirrored buffer 31 |
| | security | 0: the security code in the NVM is not to be copied into the mirrored buffer 31; |
| | | 1: the security code in the NVM is to be copied into the mirrored buffer 31 |
| configurations in the status register 34b | start sector | the main code in the NVM is now located at the start sector of the mirrored buffer |
| | end sector | the main code in the NVM is now located at the end sector of the mirrored buffer |
| | BootLoader | 0: the bootloader code in the NVM is not present in the mirrored buffer 31; |
| | | 1: the bootloader code in the NVM is present in the mirrored buffer |
| | OTP | 0: the OTP code in the NVM is not present in the mirrored buffer; |
| | | 1: the OTP code in the NVM is present in the mirrored buffer; |
| | security | 0: the security code in the NVM is not present in the mirrored buffer; |
| | | 1: the security code in the NVM is present in the mirrored buffer |
| configurations in the control register 34c | start | enable or disable replacement |
| | lock | lock a control bit in the configuration register from any modification |
| | interrupt enable | generate and enable an interrupt based on a replacement done flag or configuration error flag |
| | done flag | replacement done flag |
| | error flag | configuration error flag |

With this arrangement, after a POR or system reset of the MCU chip, the initial values of the control bits (i.e., the target configurations) in the configuration register of the memory controller can be updated in a timely manner as required by the actual boot settings of the MCU chip to allow the memory controller to time-division multiplex the mirrored buffer according to the target configurations in the configuration register to copy contents in the NVM into the mirrored buffer at different times for execution by the CPU. In addition, the statuses in the status register can be updated to flexibly trigger copying and replacement of contents in the mirrored buffer.

A better understanding of time-division multiplexing of the mirrored buffer based on the foregoing configuration table can be taken from the specific example of boot settings set forth below.
1. The capacity of the mirrored buffer 31 is equal to that of the first main bank (bank1) 21 of the NVM, and configuration information stored in the option bytes of the NVM requires the main code in the first main bank (bank1) 21 and the OTP code in the OTP bank 24, of the NVM, to be copied into the mirrored buffer 31 of the MC. Accordingly, in the event of a POR or system reset of the MCU chip, the option bytes update the initial value of the bank swap option byte in the bank control register of the mirrored buffer 31 to 0, the initial value of the control bit "OTP" in the configuration register 34a to 1, and the initial values of the control bits "BootLoader" and "security" in the configuration register 34a both to 0. Based on the values of the bank swap option byte and control bits in the configuration register 34a, the control logic unit 30 of the MC copies the OTP code in the OTP bank 24 and part of the main code in the NVM, the volume of which is equal to the capacity of the first main bank 21 minus the volume of the OTP code, into the mirrored buffer 31 at a one-to-one ratio. If it is assumed that: the capacities of the mirrored buffer 31 and the first main bank 21 of the NVM are both 512 kB; the mirrored buffer 31 stores contents on a sector-by-sector basis in order from 0 kB to 512 kB; the first main bank 21 of the NVM contains 16 sectors denoted as sector1 to sector16, each having a capacity of 32 kB; and the OTP bank 24 of the NVM has a capacity of 256 kB and contains 8 sectors, then the MC copies the 256-kB OTP code from the OTP bank 24 of the NVM into a second half of the mirrored buffer 31 (e.g., from 256 kB to 512 kB) and a 256-kB leading portion of the main code from the first main bank 21 (i.e., from sector1 to sector8 ) into a first half of the mirrored buffer 31 (from 0 kB to 255 kB). In this case, in the configuration register 34a, the initial value of the control bit "start sector" is sector1, and the initial value of "end sector" is sector8.
2. After the copying stage is completed, the control logic unit 30 of the MC updates the status register 34b and releases the CPU to allow it to run programs. As the boot settings require the OTP code (i.e., an OTP program) to be first executed, the CPU first reads the OTP program code according to the hardware settings, and the control logic unit 30 of the MC maps a read command from the CPU to the range of the mirrored buffer 31 from 256 kB to 512 kB. As a result, the CPU reads and executes the OTP program in the mirrored buffer 31 without waiting. At this time, in the status register 34b, the current value of the control bit "start sector" is sector1, the current value of the control bit "end sector" is sector8, the current value of the control bit "OTP" is 1, and the current values of the control bits "BootLoader" and "security" are 0.
3. After the execution of the OTP program is completed, the CPU is redirected to the range of the mirrored buffer 31 from 0 kB to 255 kB to execute the leading portion of the main code. To this end, the configuration register 34a of the MC is reconfigured to modify the control bit "end sector" to sector16 and the initial value of the control bit "OTP" to 0. After that, the control bit "start" in the control register 34c is set to be valid, enabling replacement of the second half of the mirrored buffer 31.
4. According to the configurations in the configuration register, the control logic unit 30 of the MC copies the remaining, trailing 256-kB portion of the contents stored in sector9 to sector16 of the first main bank (bank1) 21 of the NVM into the second half of the mirrored buffer 31 in such a manner that the copied content replace the OTP program code previously stored therein. As a result of the copying, the main code in the first main bank 21 is completely copied into the mirrored buffer 31. Accordingly, the control register 34c generates a replacement done flag and updates the configuration of the "interrupt enable" bit (i.e., produces an interrupt enable signal) based on the replacement done flag. The control logic unit 30 of the MC updates the status register 34b and produces, based on the configuration of the "interrupt enable" bit, an interrupt signal for instructing the CPU to proceed to subsequent processing. In this process, the current value of "end sector" is updated to sector16, while the current value of the control bit "OTP" remains 0. Further, in case of the 512-kB mirrored buffer 31 consisting of multiple SRAM blocks, the CPU's execution of the leading portion of the main code stored in the mirrored buffer 31 may occur simultaneously with (i.e., in parallel to) the replacement of the contents in the second half of the mirrored buffer 31 with the trailing portion of the main code. This can maintain the system in efficient operation.

In other words, in the above arrangement, the boot settings of the MCU chip further include correspondence of the main bank (bank1/bank2) to a start address (i.e., "start sector" in the configuration register 34a) and an end address (i.e., "end sector" in the configuration register 34a) of the mirrored buffer, both of which are modifiable. It is this that enables the memory controller to copy the remainder of the content in the main bank (bank1/bank2) into a bank of the mirrored buffer previously storing other contents in such a manner that the copied contents override the previously stored contents. In this way, after the CPU starts up, it can first execute special code (i.e., the bootloader, security or OTP code), which is smaller in volume and not stored in the main banks of the NVM, and part of the main code can be copied along with the special code. The remaining main code can be copied at a later time so as to override the special code in the mirrored buffer 31. As such, reduced contents are copied in the second copying step, greatly improving the system's operating efficiency.

It would be appreciated that the bootloader code and the security code may be copied (and replaced) and run by the CPU in a similar manner as described above in connection with the copying (and replacement) and execution of the OTP program and the main code. Depending on the functionality of the chip, the capacities of the functional memory banks of the NVM may be adapted and configured otherwise.

Further, in the above-discussed scheme, when the functional memory banks of the NVM are divided into at least two classes each assigned with a different priority level, the MC may copy, according to the target configurations in the configuration register 34a, the contents in the functional memory banks of the NVM into the mirrored buffer 31, as required by the current boot settings, in order from the highest to lowest priority level. Moreover, a functional memory bank in the NVM with a higher priority level may have a range of larger logical addresses, and contents in this functional memory bank may be copied into a bank of the mirrored buffer 31 which is closer to the end address. In this way, not only the program codes can be copied and executed in order of their priority, and contents in the mirrored buffer can be overridden in order from the most to least significant physical address.

Additionally, in order to meet a need for secure boot, the boot order may be locked. To this end, the lock bit "lock" in the control register 34c is configured to lock a control bit in the configuration register from any modification to its initial value and not allowed to be reconfigured until the CPU is released.

Further, in the event of an incorrect user-defined configuration, which, for example, may cause incorrect execution of a program, the control register 34c generates a configuration error flag and updates the configuration of the "interrupt enable" bit (i.e., produces an interrupt enable signal) based on the configuration error flag. The control logic unit 30 of the MC produces an interrupt signal based on the configuration of the "interrupt enable" bit, which instructs the CPU to proceed to subsequent processing.

It would be appreciated that the above description of the internal architecture of the MC of the present invention made in connection with the foregoing examples is merely exemplary and illustrative and does not imply that this internal architecture exactly has the above-described hardware components. In other embodiments of the present invention, the architecture of Fig. 6 may be adapted, by omitting some hardware components or adding other hardware components, into new MCs satisfying the requirements of different applications, which are also embraced in the scope of the present invention.

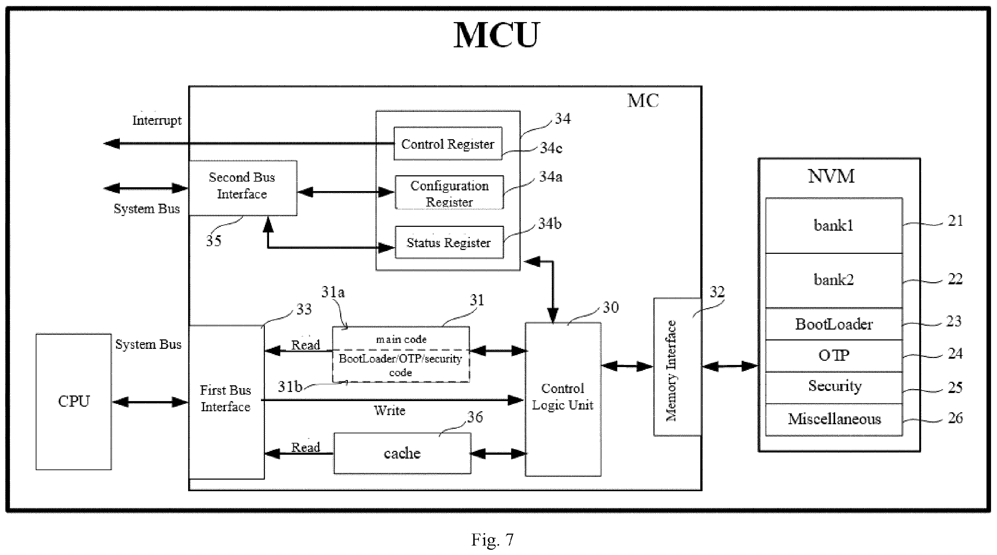

For example, referring to Fig. 7, in another embodiment of the present invention, the MC further includes a built-in cache 36 which allows for faster reading and writing than the NVM and is configured for contents to be copied therein, as required by the current boot settings, from logical addresses of the NVM outside the logical address range of the mirrored buffer 31. Contents in the cache 31 can be directly accessed by the CPU. Accesses of the CPU to logical addresses of the NVM outside the logical address range of the access mirrored buffer 31 can be accelerated by the cache 36 that allows for faster reading and writing than the NVM, resulting in improvements in system performance.

Referring to Figs. 6 to 9, on the basis of the same inventive concept, in one embodiment of the present invention, there is also provided an MCU chip including a CPU and a memory controller MC according to any embodiment of the present invention, which are integrated in a single chip package. The CPU is communicatively connected to the MC by a system bus (which may employ AXI, AHB or any other suitable bus protocol) and a first bus interface 33.

In one example, referring to Figs. 6 to 8, NVM is integrated on the MCU chip (i.e., on-chip memory), NVM is communicatively connected to the MC via a memory interface 32. The MC is included to control operation of the CPU on the NVM. In a specific implementation, the NVM may be implemented, for example, as eFlash memory or RRAM, which is fabricated along with the MC and the CPU in a single die on the MCU chip. In an alternative specific implementation, it may be implemented within the MCU chip as a memory die (e.g., a flash memory die), which is integrated together with CPU core and MC dies within a single package using a system-in-package (SiP) process. When a POR or system reset of the MCU chip occurs, the MC responds to a read command made by the CPU according to current boot settings of the MCU chip to time-division multiplex the mirrored buffer 31 to map it to some of a main bank (bank1/bank2) 21/22, a bootloader bank 23, an OTP bank 24 and a security bank 25 in the NVM at different times. This has been described in detail above, and further description thereof is omitted here. In this way, the CPU can directly run contents from those banks of the NVM in the mirrored buffer without waiting, thereby greatly speeding up overall operation of the system and enhancing the performance of the MCU chip.

In another example, referring to Fig. 7, there is no cache in the MC, but the MCU chip further includes NVM and a cache. The NVM is communicatively connected to the MC via a memory interface 32, and the cache allows for faster reading and writing than the NVM and is provided on a system bus outside the MC. The cache communicates with the NVM and the CPU is configured for copying therein at a one-to-one ratio of contents stored in the NVM outside a logical address range of the mirrored buffer 31 as required by current boot settings of the MCU chip. Moreover, the content copied into the cache 31 can be directly accessed by the CPU through the system bus. As accesses of the CPU to logical addresses of the NVM outside the logical address range of the access mirrored buffer 31 can be accelerated by the cache 36 that allows for faster reading and writing than the NVM, the performance of the system can be improved.

In yet another example, referring to Fig. 9, the MCU chip is communicatively connected to external NVM (i.e., off-chip memory). For example, the NVM may be implemented outside the MCU chip as off-chip memory, such as flash memory or DRAM, which is connected to the MCU chip via PCB traces. Upon a POR or system reset of the MCU chip, the MC responds to a read command made by the CPU according to current boot settings of the MCU chip to time-division multiplex the mirrored buffer 31 to map it to some of a main bank (bank1/bank2) 21/22, a bootloader bank 23, an OTP bank 24 and a security bank 25 in the NVM at different times. This has been described in detail above, and further description thereof is omitted here. In this way, the CPU can directly run contents from those banks of the NVM in the mirrored buffer without waiting, thereby greatly speeding up overall operation of the system and enhancing the performance of the MCU chip.

Since the MCU chip of the present invention incorporates the memory controller of the invention, it can provide high performance at lower chip cost and a reduced chip area.

The description presented above is merely that of a few preferred embodiments of the present invention and is not intended to limit the scope thereof in any sense. Any and all changes and modifications made by those of ordinary skill in the art based on the above teachings fall within the scope of the invention.

## Claims

1. A memory controller for controlling operation of a central processing unit (CPU) of a microcontroller unit (MCU) on associated non-volatile memory (NVM), the MCU formed with a built-in mirrored buffer (31), the mirrored buffer (31) having a capacity smaller than a capacity of the NVM, wherein the memory controller is configured to:
time-division multiplex the mirrored buffer (31) according to boot settings of the MCU so that contents in the NVM required by the boot settings are copied into the mirrored buffer (31) in sequential copying steps and that, after each copying step is completed, the CPU is released to directly read and run contents copied into the mirrored buffer (31) in a specific copying step, simultaneously with or followed by initiation of the next copying step in which contents copied into the mirrored buffer (31) are able to override part or the entirety of the contents copied in the specific copying step.

2. The memory controller of claim 1, wherein the NVM is integrated with the memory controller and the CPU within a single chip package, or wherein the memory controller and the CPU are integrated in a single chip package, while the NVM is arranged outside the chip package.

3. The memory controller of claim 1, wherein the mirrored buffer (31) is one or more static random-access memory blocks.

4. The memory controller of claim 1, wherein the memory controller is configured to initiate the next copying step when the CPU is running the contents copied in the specific copying step so that the contents copied in the specific copying step are replaced in parallel with the contents copied in the next copying step.

5. The memory controller of claim 1, wherein the NVM has a plurality of functional memory banks and the memory controller has a configuration register (34a) and a status register (34b), the configuration register (34a) and the status register (34b) are both built in the memory controller and each have control bits each corresponding to a respective one of the functional memory banks, wherein:
the configuration register (34a) is configured to load and store initial values of the control bits corresponding to the respective functional memory banks required by the boot settings after a power-on reset or system reset of the MCU, the initial value of each control bit corresponding to the respective functional memory bank characterizing whether contents in the functional memory bank are to be copied into the mirrored buffer (31); and/or
the status register (34b) is configured to store and update current values of the control bits corresponding to the respective functional memory banks based on copied contents currently stored in the mirrored buffer (31), the current value of each control bit corresponding to the respective functional memory bank characterizing whether contents in the functional memory bank have been copied into the mirrored buffer (31); and/or
the memory controller is further configured to time-division multiplex the mirrored buffer (31) according to the initial values of the control bits in the configuration register (34a) so that the contents in the NVM required by the boot settings are copied into the mirrored buffer (31) in the sequential steps, and to update the current value(s) of affected control bit(s) in the status register (34b).

6. The memory controller of claim 5, further comprising a control register (34c) and a control logic unit (30), which are both built therein, wherein
the control register (34c) is configured to accomplish, under the control of the control logic unit (30), at least one of: 1) enabling or disabling the function of overriding and rewriting a bank of the mirrored buffer (31); 2) generating a replacement done flag upon the completion of overriding and rewriting of a bank of the mirrored buffer (31); 3) generating a configuration error flag for an incorrect user-defined configuration; 4) producing, in response to at least one of a replacement done flag and a configuration error flag, an interrupt signal for notifying the CPU; and 5) configuring a lock bit in the event of a need for secure boot, which locks a corresponding one of the control bits in the configuration register (34a) from any modification.

7. The memory controller of claim 5, further comprising a first bus interface (33) and a second bus interface (35), wherein:
the first bus interface (33) is configured to connect the memory controller on a master interface of a system bus to allow the CPU to be released after the completion of each copying step to read and run contents copied into the mirrored buffer (31) in the specific copying step; and/or
the second bus interface (35) is configured to connect the memory controller on a slave interface of the system bus to allow an associated master device on the system bus to access the memory controller; and/or
the memory controller further has a memory interface (32), wherein:
the memory interface (32) is configured to establish a communicative connection between the control logic unit (30) and the NVM; and
the control logic unit (30) is configured to, when receiving an erase command from the CPU, send a corresponding command for rewriting contents in the NVM through the memory interface (32) and, if necessary, update the rewritten contents to the mirrored buffer (31).

8. The memory controller of any one of claims 5 to 7, wherein the NVM has option bytes, the option bytes configured to store the initial values of the control bits and update the configuration register (34a) upon the power-on reset or system reset of the MCU.

9. The memory controller of claim 8, wherein the option bytes are further configured to store chip boot options of the MCU, which specify an initial address that the CPU first reads upon the power-on reset or system reset of the MCU, or
wherein at least one boot pin of the MCU is used to set an initial address that the CPU first reads upon the power-on reset or system reset of the MCU.

10. The memory controller of claim 1, wherein the NVM has at least one main bank (21, 22) for storing associated main code and at least one code bank for storing other code than the main code; the capacity of the mirrored buffer (31) is equal to or smaller than a capacity of one of the main bank(s); and the memory controller is further configured to: first copy contents in at least one of the code bank(s) and part of contents in one of the main bank(s) into the mirrored buffer (31) according to the boot settings; then release the CPU to allow the CPU to read and run the contents copied from the code bank(s) in the mirrored buffer (31); during or after the running, copy the remainder of the contents from the main bank (21, 22) into the mirrored buffer (31) so that it overrides the contents from the code bank(s) that were previously stored in the mirrored buffer (31); and again release the CPU to allow the CPU to run the contents copied from the main bank (21, 22) in the mirrored buffer (31).

11. The memory controller of claim 10, wherein the code bank(s) comprise(s) at least one of a bootloader bank (23) for storing bootloader code, a one-time programming bank (24) for storing one-time programming code and a security bank (25) for storing security code; and/or
wherein the boot settings comprise a start address and an end address for the main bank (21, 22) in the mirrored buffer (31), the start address and the end address are modifiable to enable the memory controller to copy the remainder of the contents from the main bank (21, 22) into the mirrored buffer (31) so that it overrides the contents from the code bank(s) that were previously stored in the mirrored buffer (31).

12. The memory controller of claim 10, wherein the functional memory banks in the NVM are divided into at least two classes each assigned with a different priority level and the memory controller copies, according to the boot settings, contents in the functional memory banks into the mirrored buffer (31) in order from the highest to lowest priority level in different steps on a time-division basis.

13. The memory controller of claim 10, wherein each functional memory bank with a higher priority level in the NVM has larger logical addresses and contents in the functional memory bank with the higher priority level are copied to a bank of the mirrored buffer (31) which is closer to an end address thereof.

14. The memory controller of claim 1, further having an associated cache which is built in, or arranged outside, the memory controller, wherein the cache allows for faster reading and writing than the NVM and is configured for contents to be copied therein, as required by the boot settings, from addresses in the NVM outside a logical address range of the mirrored buffer (31) so that the contents copied into the cache are directly accessible to the CPU.

15. A microcontroller unit (MCU) chip, comprising a central processing unit (CPU) and the memory controller of any one of claims 1 to 14, which are integrated within a single chip package, the CPU communicatively connected to the memory controller, wherein non-volatile memory (NVM) is also integrated in, or arranged outside, the chip package, the NVM communicatively connected to the memory controller, the memory controller configured to control operation of the CPU on the NVM.
